# EUROPEAN PATENT APPLICATION

(11) **EP 3 048 349 A1**
(43) Date of publication of application: **27.07.2016**
(21) Application number: 16152310.5
(22) Date of filing: 21.01.2016
(51) Int. Cl.: F16K 31/122, F16K 11/04, F16K 11/10

(54) **VOLUME BOOSTER SYSTEM**

(30) Priority: 22.01.2015 IN 224MU2015
(71) Applicant: ASCO CONTROLS B.V., 3925 BD Scherpenzeel (NL)
(72) Inventor: CHOPADE, Manoj Baliram, 411033 PUNE PIN (IN)
(74) Representative: EP&C

(57) **Abstract**

A volume booster system (100) comprising a hollow body (101) disposed between an operative top cover (102) and an operative bottom cover (103). Inlet (108) and outlet (109) ports are configured on the hollow body of the volume booster system. Pilot port (107) is configured on the operative top cover of the volume booster system. The volume booster system further comprises an exhaust port (110). A piston (111) is disposed inside the hollow body. The piston is adapted to move axially within the hollow body based on pressure difference between pressure of fluid communicated to operative bottom of the piston from the outlet port and pressure of fluid communicated to an operative top of said piston via the pilot port. A plunger (114) is connected to the piston at one end. The plunger is adapted to move axially based on the movement of the piston and selectively regulate fluid communication between the inlet port, the outlet port, and the exhaust port.

## Description

### FIELD

The present disclosure relates to the field of flow regulating systems, particularly to volume booster systems.

### BACKGROUND

Flow regulating systems form a very important part of the process industry. Some applications in process the industry require the flow regulating systems to deliver fluid (e.g., air) at very high flow rates. Such flow regulating systems are known as volume booster systems. Volume booster systems have varied applications, e.g., in remote actuation of a valve in a pipeline, wherein the actuation mechanism involves the use of a fluid operated ball valve. To ensure optimal actuation of the fluid operated ball valve, it is critical to make the fluid available for actuating a ball of the ball valve in a short period of time. This is achieved only when the flow rate of the fluid is high. This high flow rate of fluid is achieved by volume booster systems.

However, the conventional volume booster systems comprise a large number of components and have a complex configuration. A complex configuration of the volume booster system directly increases the manufacturing cost. Also, with an increase in the number of parts, the reliability is reduced and the maintenance cost is increased. Furthermore, because of such a complex configuration, the flow-path of the fluid from inlet to outlet, and from outlet to exhaust involves a complicated and a long profile that is not smooth. This results in resistance to the flow of the liquid inside the body of the volume booster system, which adversely affects the flow rate of the fluid..

Hence there is a need of a volume booster system with a simple configuration and a comparatively fewer number of components, so that the volume booster system is inexpensive. Further, there is a need for a volume booster system that has a configuration such that the flow path of the fluid through the volume booster system is reduced and the flow rate of the fluid inside the volume booster system is not compromised.

### OBJECTS OF THE DISCLOSURE

Some of the objects of the present disclosure, which at least one embodiment herein satisfies are as follows:

It is an object of the present disclosure to ameliorate one or more problems of the conventional practices or to at least provide a useful alternative.

An object of the present disclosure is to provide a volume booster system that delivers a high fluid flow rate.

Another object of the present disclosure is to provide a volume booster system with a construction such that the fluid flow rate is barely compromised.

Another object of the present disclosure is to provide a volume booster system which has a very simple flow path.

Yet another object of the present disclosure is to provide a volume booster system that has a reduced number dynamic seals.

Yet another object of the present disclosure is to provide a volume booster system that exhibits increased reliability and reduced maintenance cost owing to a reduced number of components.

Yet another object of the present disclosure is to provide a volume booster system that has a compact configuration.

Yet another object of the present disclosure is to provide a volume booster system that has a simple construction.

Still another object of the present disclosure is to provide a volume booster system that is inexpensive and exhibits an extended service life.

Other objects and advantages of the present disclosure will be more apparent from the following description when read in conjunction with the accompanying figure, which are not intended to limit the scope of the present disclosure.

### SUMMARY

A volume booster system has a hollow body disposed between an operative top cover and an operating bottom cover. The hollow body is divided into a first section and a second section by a dividing wall, wherein the first section has a pilot port configured thereon, and the second section has an inlet port and an outlet port configured thereon. The volume booster system further comprises an exhaust port configured on the hollow body.

A piston is adapted to slidably move in the first section and axially move within the first section based on the pressure difference across the piston. The piston is further adapted to be urged against the dividing wall by a first urging element to define a first configuration of the piston in which the piston is blocking apertures, and it is adapted to be moved against the urging force of the first urging element based on the pressure difference across the piston.

The volume booster system further comprises a plunger and a blocking element. The plunger is connected to the piston and adapted to axially slide within the hollow body corresponding to the axial movement of the piston in the first section. The blocking element is adapted to move axially in the second section. The blocking element is further adapted to be urged by a second urging element to block the inlet port and restrain the fluid communication between the inlet port and the outlet port and fluid flow through the exhaust port.

The volume booster system is adapted to operate in an operative open configuration, an operative closed configuration, and an operative quick exhaust configuration. In the operative open configuration, the fluid flows from inlet port to outlet port, and exhaust port is closed. In operative closed configuration, the fluid does not flow from inlet port to outlet port, and flow through exhaust port is also restrained. And in operative quick exhaust configuration, the fluid flows from outlet port to exhaust port and the inlet port is closed. All the operating configurations of the volume booster system are governed by the movement of the plunger and the blocking element based on pilot pressure and outlet pressure.

### BREIF DESCRIPTION OF DRAWINGS

A volume booster system will now be described with the help of the accompanying drawings in which:
Fig. 1A illustrates a cross sectional view of a volume booster system in accordance with a first embodiment of the present disclosure;
Fig. 1B and Fig. 1C illustrate different operating configurations of the volume booster system of Fig. 1A;
Fig. 2 illustrates a cross sectional view of a volume booster system in accordance with a second embodiment of the present disclosure.
Fig. 3 illustrates a cross sectional view of a volume booster system in accordance with a third embodiment of the present disclosure.

### DETAILED DESCRIPTION

A volume booster system with a high fluid flow rate will now be described with reference to the embodiments, which do not limit the scope and ambit of the disclosure. The description provided is purely by way of example and illustration. The embodiment herein, the various features, and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced, and to further enable those of skill in the art to practice the embodiments herein. Accordingly, the examples should not be construed as limiting the scope of the embodiments herein.

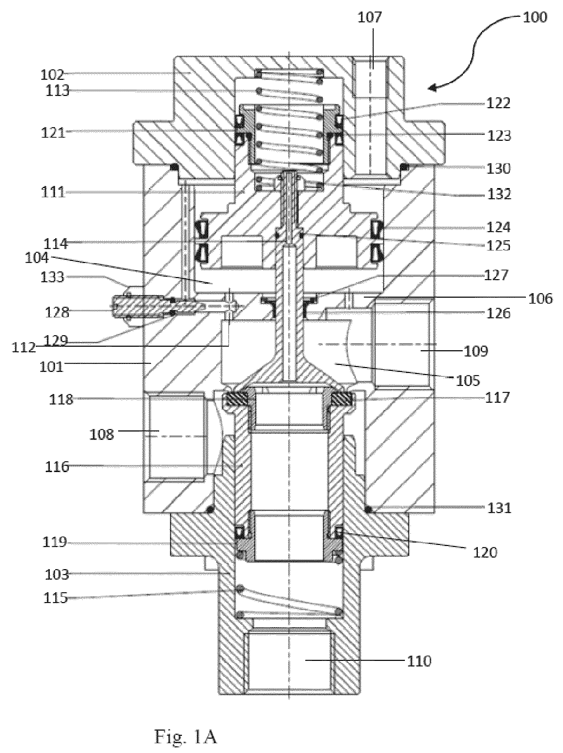

Fig. 1A illustrates a cross sectional view of the volume booster system in accordance with a first embodiment of the present disclosure. The volume booster system 100 illustrated in Fig. 1A has a low temperature configuration and operates optimally within a temperature range of -60°C to +60°C. The volume booster system 100 comprises a hollow body 101 disposed between an operative top cover 102 and an operative bottom cover 103. An O-ring 130 is disposed between the operative top cover 102 and the hollow body 101, and an O-ring 131 is disposed between the operative bottom cover 103 and the hollow body 101. The O-rings 130, 131 facilitate sealing such that the fluid is not leaked out of the corresponding mating surfaces of the volume booster system 100. The hollow body 101 is divided into a first section 104 and a second section 105 by a dividing wall 106. The volume booster system 100 further comprises a pilot port 107 which is disposed on the operative top cover 102 in accordance with an embodiment of the present disclosure. The pilot port 107 is in fluid communication with the first section 104. An inlet port 108 and an outlet port 109 are in fluid communication with the second section 105 of the hollow body 101. The volume booster system 100 further comprises an exhaust port 110 formed in the operative bottom cover 103 of the volume booster system 100. In another embodiment, the exhaust port 110 may be disposed in the hollow body 101 extending in a direction orthogonal to the longitudinal axis of the volume booster system 100. The different components of the volume booster system 100 operate along a common central axis to work in the operative open configuration and the operative quick exhaust configuration.

The volume booster system 100 further comprises a piston 111 disposed in the first section 104 of the hollow body 101. The piston 111 is adapted to be received and move axially within the first section 104 of the hollow body 101. The movement of the piston 111 within the first section 104 is based on the pressure difference of the fluid acting across the piston 111. The piston 111 receives fluid via apertures 112 formed on the dividing wall 106, and the pressure of the fluid acts on the operative bottom of the piston 111 to regulate the pressure difference across the piston 111, which in turn governs the sliding of the piston 111 inside the first section 104. The piston 111 is further adapted to be urged against the dividing wall 106 via a first urging element 113. In the present embodiment, the first urging element 113 is a spring. In another embodiment, the first urging element 113 may be a diaphragm. In yet another embodiment, the first urging element 113 may be an assembly of a diaphragm and a spring. The first urging element 113 is disposed in a socket 121 and received on the piston 111. The socket 121 includes grooves formed on the body of the socket 121 to receive lip seals 122, such that the lip seals 122 are in contact with the outer surface of the socket 121 and the inner surface of the operative top cover 102. An O-ring 123 is disposed between the socket 121 and the piston 111. The piston 111 has grooves formed on the body of the piston 111 to receive piston seals 124. The movement of the piston 111 and the operation of the volume booster system 100 will be discussed in detail in the subsequent paragraphs of the present disclosure.

The volume booster system 100 further comprises a plunger 114 and a blocking assembly configured to receive the plunger 114. The plunger 114 passes through an opening formed in the dividing wall 106 and is connected to the piston 111 at one end via a lock nut. The portion of the plunger 114 received inside the piston 111 has a groove configured to receive an O-ring 125 that is contact with the inner surface of the piston 111. The shape of the plunger 114 is not limited to the shape as illustrated in the present embodiment and may have any kind of shape as per the application requirements. The opening formed in the dividing wall 106 to receive the plunger 114 is configured to receive a sleeve bearing 126 and a snap ring 127. The sleeve bearing 126 guides the axial movement of the plunger 114 and helps in maintaining the center alignment of the plunger 114 for better operation by restricting the motion of the plunger 114 in the lateral plane. The plunger 114 is configured to move axially within the hollow body 101 corresponding to the movement of the piston 111. The blocking assembly is adapted to move axially within the second section 105 of the hollow body 101 and is configured to be received in the operative bottom cover 103 of the volume booster system 100. The blocking assembly is further adapted to be urged by a second urging element 115 to block the inlet port 108. The blocking assembly comprises a lower seat 116, a disc seal 117, and sockets 118, 119. The lower seat 116 is disposed between the sockets 118, 119, and the disc seal 117 facilitates sealing any kind of leakage of fluid from the inlet port 108 into the hollow body 101. The lower seat 116 has groove to receive a lip seal 120 at the end that is in contact with the socket 119. The socket 119 also has a groove to receive the second urging element 115. In the present embodiment, the second urging element 115 is a spring.

The volume booster system 100 further comprises a restrictor screw 128 inserted in an opening formed in the hollow body 101. The restrictor screw 128 has a groove configured to receive an O-ring 129. The restrictor screw 128 is held in a secured position via a lock nut 133. The restrictor screw 128 is a safety feature that facilitates the regulation the fluid pressure inside the volume booster system 100.

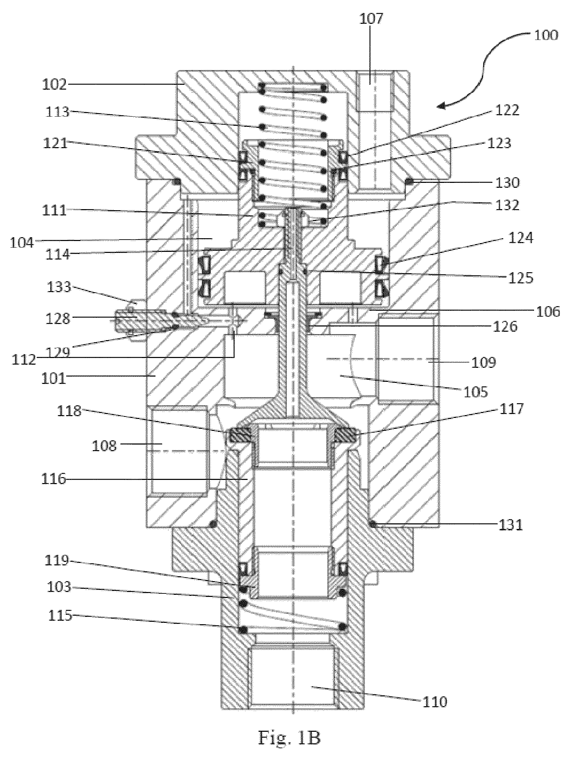

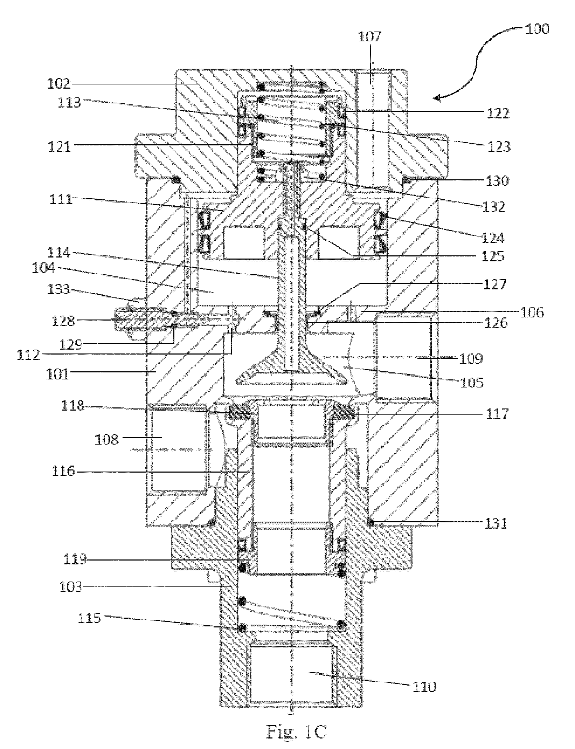

Fig. 1B and Fig. 1C illustrate the different operative configurations of the volume booster system 100 in accordance with the present disclosure. The volume booster system 100 has three operative configurations, viz., operative closed configuration, operative open configuration, and operative quick exhaust configuration. These operative configurations of the volume booster system will now be described with reference to Fig. 1A, Fig. 1B, and Fig. 1C.

Fig. 1A illustrates the operative closed configuration of the volume booster system 100. The operative closed configuration of the volume booster system 100 is achieved when the pressure of fluid across the pilot port is equal to the pressure of fluid across the outlet port. In this condition, the piston 111 is in an equilibrium position as the pressure across both the sides of the piston 111 is equal, and the only force acting on the piston 111 is the force applied by the first urging element 113. Apertures 112 formed in the dividing wall 106 enable the operative bottom of the piston 111 to sense the pressure of the fluid across the outlet port 109. The pressure across the pilot port 107 is sensed by the operative top of the piston 111. Therefore, the piston 111 is adapted to move axially within the first section 104 based on the pressure difference between the pressure of fluid communicated to the operative bottom of the piston 111 from the outlet port 109 via apertures 112 configured on the dividing wall 106 and the pressure of fluid communicated to an operative top of said piston via the pilot port 107. When the piston 111 is in the equilibrium position, the position of the plunger 114 is such that it blocks the inlet port 108 and the exhaust port 110. In such a position, the fluid communication between the inlet port 108, outlet port 109, and the exhaust port 110 is restrained since the inlet port 108 and the exhaust port 110 are closed.

Fig. 1B illustrates the operative open configuration of the volume booster system 100. The operative open configuration of the volume booster system 100 is achieved when the pressure of fluid across the pilot port is greater than the pressure of fluid across the outlet port. In this condition, the pressure of fluid across the pilot port 107 acts on the operative top of the piston 111, and the piston 111 is pushed towards the dividing wall 106 against the urging force exerted by the first urging element113. In this position, the piston 111 is under the action of the urging forces exerted by the first urging element 113 and the second urging element 115. The piston 111 is adapted to move axially within the first section 104 based on the pressure difference between the pressure of fluid communicated to the operative bottom of the piston 111 from the outlet port 109 via apertures 112 configured in the dividing wall 106 and the pressure of fluid communicated to an operative top of said piston via the pilot port 107. When the piston 111 is pushed towards the dividing wall 106, the plunger 114 pushes the blocking assembly against the urging force exerted on the blocking assembly by the second urging element 115, such that the inlet port 108 is opened and the fluid communication between the inlet port 108 and the outlet port 109 is enabled. In such a position, the fluid flows from the inlet port 108 to the outlet port 109, and the exhaust port 110 is closed by the plunger 114.

Fig. 1C illustrates the operative quick exhaust configuration of the volume booster system 100. The operative quick exhaust configuration of the volume booster system 100 is achieved when the pressure of fluid across the outlet port 109 is greater than the pressure of fluid across the pilot port 107. In this condition, the pressure of fluid across the outlet port 109 acts on the operative bottom of the piston 111, and the piston 111 is pushed inside the operative top cover 102 (as illustrated in Fig. 1C). In this position, the plunger 114 is moved axially towards the operative top cover 102, and blocking assembly is now in an equilibrium position. In the equilibrium position, the blocking assembly blocks the inlet port 108, and the movement of the plunger 114 opens the exhaust port 110. As the exhaust port 110 is opened, the fluid communication between the outlet port 109 and the exhaust port 110 is enabled. In such a position, the fluid flows from the outlet port 109 to the exhaust port, and the inlet port 107 is closed by the blocking assembly. The operative quick exhaust configuration is basically a safety feature that helps pressure regulation in case of any unexpected surges in the pressure of fluid across the outlet port 109.

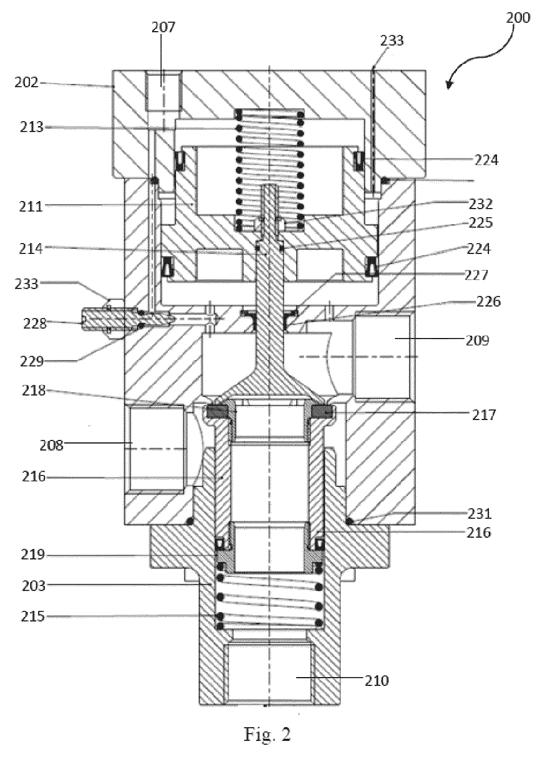

Fig. 2 illustrates a cross sectional view of the volume booster system in accordance with a second embodiment of the present disclosure. The volume booster system 200 disclosed in Fig. 2 gives optimal operation within a temperature range of -60°C to +60°C. In this embodiment, the socket 121 and lip seals 122 disclosed in Fig. 1A are absent, and the geometry of the piston 211 is changed, i.e., the piston 211 is a stepped piston. Also, a breather hole 233 is provided in the volume booster system 200. All the other features and the operative configurations of the volume booster system 200 are similar to those explained with respect to the volume booster system 100 of the first embodiment. Hence, those features are not explained again for the sake of brevity of the present disclosure.

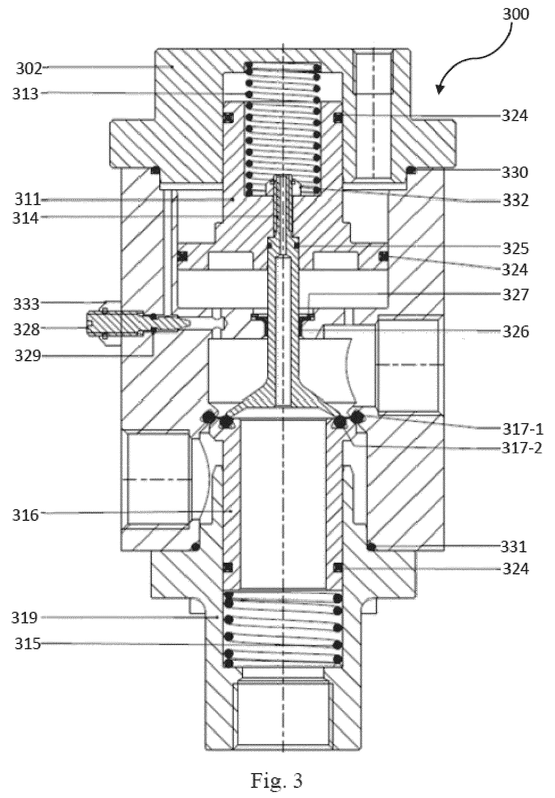

Fig. 3 illustrates a cross sectional view of the volume booster system in accordance with a third embodiment of the present disclosure. The volume booster system 300 disclosed in Fig. 3 gives optimal operation within a temperature range of -20°C to +90°C. In this embodiment, the sockets 118, 119, 121 are absent. Lip seals 120,122 associated with the sockets 119, 121 are also absent in this embodiment. The disc seal 117 associated with socket 118 has been replaced by two O-ring seals 317-1, 317-2, wherein one O-ring seal 317-1 is used to achieve sealing between the hollow body 301 and the lower seat 316, and other O-ring seal 317-2 is used to achieve sealing between the plunger 314 and the lower seat 316. The piston seals 124 used in the volume booster system 100 have been replaced with the X-ring seals 324. X- ring seals offer the advantage that they do not start rolling inside their chambers when moving back and forth relative to the walls of body, and thus, they may have a long life span and good sealing capacity. All the other features and the operative configurations of the volume booster system 300 are similar to those explained with respect to the volume booster system 100 of the first embodiment. Hence, those features are not explained again for the sake of brevity of the present disclosure.

The volume booster system (100, 200, 300) of the present disclosure has many advantages over the conventional volume booster systems. In the volume booster system (100, 200, 300) of the present disclosure, the flow path for the fluid has minimal directional changes and is very simple. Such a flow path does not provide any resistance to the flow of the fluid, and a fluid rate higher than the conventional volume boosters is obtained. Furthermore, the volume booster system (100, 200, 300) of the present disclosure has a stacked construction; the outcome of which is a product with a compact configuration. The stacked construction of the volume booster system (100, 200, 300) is attributed to the placement of the inlet port, the outlet port, and the exhaust port in a close proximity to each other in dynamic scenario, which also results in a comparatively shorter flow path and a comparatively higher flow rate as compared to conventional volume booster systems. The profile of the hollow body 301 is not limited to the profile illustrated in Fig. 3, and the different kinds of profiles for the hollow body as per the application requirements are within the ambit of the present disclosure.

The CFD simulations were conducted to compare the flow rates of the conventional volume booster systems with the volume booster system (100, 200, 300) of the present disclosure for the booster size of 1" diameter under identical operating conditions. The results of the simulations are tabulated as follows in TABLE 1:

**TABLE 1:**

| **FLOW** | **Conventional volume booster system.** | **Volume booster system** |
|---|---|---|
| Flow from inlet port to outlet port | 11 m³/hr | 15.7 m³/hr |
| Flow from outlet port to exhaust port | 11 m³/hr | 13.1 m³/hr |

As can be seen from the above table, significant improvements in the flow rate values have been obtained in the volume booster system (100, 200, 300) of the present disclosure.

The volume booster system (100, 200, 300) of the present disclosure has lesser number of dynamic seals as compared with the conventional volume boosters. This results in reduced friction during the operation of the volume booster system (100, 200, 300). Reduced friction results in an extended service life of the volume booster systems (100, 200, 300).

### TECHNICAL ADVANCEMENTS AND ECONOMIC SIGNIFICANCE

The volume booster system (100, 200, 300) in accordance with the present disclosure described herein above has several technical advantages including but not limited to the realization of a volume booster system (100, 200, 300) that:
- delivers a high fluid flow rate owing its accurate control function with change in pressure difference;
- has a construction such that the fluid flow rate is barely compromised;
- has a very simple flow path;
- has a reduced number dynamic seals;
- exhibits increased reliability and reduced maintenance owing to a reduced number of components;
- has a compact configuration;
- has a simple construction;
- is inexpensive and exhibits an extended service life.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or mixture or quantities, as the use may be in the embodiment of the disclosure to achieve one or more of the desired objects or results.

Any discussion of documents, acts, materials, devices, articles or the like that has been included in this specification is solely for the purpose of providing a context for the disclosure. It is not to be taken as an admission that any or all of these matters form part of the prior art base or were common general knowledge in the field relevant to the disclosure, as it existed anywhere before the priority date of this application.

## Claims

1. A volume booster system (100, 200, 300) comprising;
• a hollow body (101, 201, 301) disposed between an operative top cover (102, 202, 302) and an operative bottom cover (103, 203 303), wherein said hollow body (101, 201, 301) is divided into a first section (104, 204,304) and a second section (105, 205, 305) by a dividing wall (106, 206, 306), wherein said first section ( 104,204,304) has a pilot port (107, 207, 307) configured thereon, and wherein said second section (105, 205, 305) has an inlet port (108, 208, 308) and an outlet port (109, 209, 309) configured thereon;
• an exhaust port (110, 210, 310);
• a piston (111, 211, 311) adapted to slidably move in said first section (104, 204,304) and axially move within said first section (104, 204,304) based on pressure difference across said piston (111,211,311),
• a first urging element (113, 213, 313) adapted to urge said piston (111, 211, 311) against said dividing wall (106, 206, 306) to define a first configuration of said piston (111, 211, 311) wherein said piston (111, 211, 311) blocks apertures formed on said dividing wall (106, 206, 306), said piston (111, 211, 311) adapted to move against an urging force of said first urging element (113,213,313) and a second urging element (115,215,315) based on pressure difference across said piston (111, 211, 311);
• a plunger (114, 214, 314) and a blocking assembly, wherein said plunger (114, 214,314) is connected to said piston (111, 211, 311) and is adapted to axially slide within said hollow body (101, 201, 301) corresponding to the axial movement of said piston (111, 211, 311) in said first section (104, 204, 304), and wherein said blocking assembly adapted to move axially in said second section (105, 205, 305), said blocking assembly being further adapted to be urged by said second urging element (115, 215, 315) to block said inlet port (108, 208, 308) and restrain fluid communication between said inlet port (108, 208, 308) and said outlet port (109, 209, 309) and fluid flow through said exhaust port (110, 210, 310);
the arrangement being such that said volume booster system (100,200,300) is adapted to operate in:
an operative open configuration wherein fluid flows from said inlet port (108, 208, 308) to said outlet port (109, 209, 309), and said exhaust port (110, 210, 310) is closed;
in an operative closed configuration wherein fluid flow from said inlet port (108,208,308) to said outlet port (109, 209, 309) is restrained, and said exhaust port (110, 210, 310) is closed; and
in an operative quick exhaust configuration wherein fluid flows from said outlet port (109, 209, 309) to said exhaust port (110, 210, 310) and said inlet port (108, 208, 308) is closed,
wherein all said configurations are based on pressure of fluid across said pilot port (107, 207, 307) and pressure of fluid across said outlet port (109,209,309), and said configurations are governed by movement of said plunger (114, 214, 314) and said blocking assembly.

2. The volume booster system (100, 200, 300) as claimed in claim 1, wherein said piston (111, 211, 311) is adapted to move axially within said first section (104, 204,304) based on pressure difference between pressure of fluid communicated to an operative bottom of said piston (111, 211, 311) from said outlet port (109, 209, 309) via at least one said aperture (112, 212, 312) configured on said dividing wall (106, 206, 306) and pressure of fluid communicated to an operative top of said piston (111, 211, 311) via said pilot port (107, 207, 307).

3. The volume booster system (100, 200, 300) as claimed in claim 1, wherein said volume booster system (100, 200, 300) adapted to achieve;
• said operative open configuration when the pressure of fluid across said pilot port (107, 207, 307) is greater than the pressure of fluid pressure across said outlet port (109, 209, 309);
• said operative closed configuration when the pressure of fluid across said outlet port (109, 209, 309) is equal to the pressure of fluid across said pilot port (107, 207, 307);
• said operative quick exhaust configuration when the pressure of fluid across said outlet port (109, 209, 309) is greater than the pressure of fluid across said pilot port (107, 207, 307).

4. The volume booster system (100, 200, 300) as claimed in claim 1, wherein said piston (111, 211, 311) comprises grooves adapted to receive one of at least one piston seal (124, 224) and at least one X-ring seal (324).

5. The volume booster system (100, 200, 300) as claimed in claim 1, wherein said first urging element is at least one of a diaphragm and a spring.

6. The volume booster system (100, 200, 300) as claimed in claim 1, wherein said second urging element (115, 215, 315) is a spring.

7. The volume booster system (100, 200, 300) as claimed in claim 1, wherein a sealing element is disposed between said plunger (114, 214, 314) and said blocking assembly, wherein said sealing element is one of a disc seal (117, 217) or at least one O-ring seal (317).

8. The volume booster system (100, 200, 300) as claimed in claim 1, wherein said exhaust port (110, 210,310) is disposed on said operative bottom cover (103, 203, 303).
